# EUROPEAN PATENT APPLICATION

(11) **EP 4 606 199 A1**
(43) Date of publication of application: **27.08.2025**
(21) Application number: 23879585.0
(22) Date of filing: 02.10.2023
(51) Int. Cl.: A01C 1/06

(54) **BINDER FOR SEED COATING, COMPOSITION FOR SEED COATING, COATED SEED, AND METHOD FOR PRODUCING AND CULTIVATING COATED SEED**

(30) Priority: 18.10.2022 JP 2022166673
(71) Applicant: Arakawa Chemical Industries, Ltd., Osaka-shi Osaka 541-0046 (JP)
(72) Inventor: FUJIOKA Daisuke, Tsukuba-shi, Ibaraki 300-2611 (JP); NITTO Seiya, Tsukuba-shi, Ibaraki 300-2611 (JP)
(74) Representative: Becker, Eberhard
(86) International application number: PCT/JP2023/035897
(87) International publication number: WO 2024/084938

(57) **Abstract**

This binder (A) for seed coating contains a (meth)acrylamide-based polymer (a1) that is a reaction product of a monomer group including (meth)acrylamide (a1-1), wherein: the content (in terms of solid content) of the component (a1) with respect to 100 mol% (in terms of solid content) of the total amount of the monomer group in the component (a1) is at least 30 mol%; and the weight average molecular weight of the component (a1) is 100,000 to 10,000,000.

## Description

### Technical Field

The present disclosure relates to a binder for seed coating, a composition for seed coating, a coated seed, a method for producing a coated seed, and a cultivation method.

### Background Art

With the aging of agricultural workers and population decline, labor-saving in agricultural work has become an issue that needs to be solved. As a means to solve this issue, coated seeds have been proposed, which are obtained by coating the surface of plant seeds with a composition for seed coating mainly composed of a carrier (clay minerals, inorganic materials, etc.) to configure into a spherical shape with the seed as a core. By coating seeds of a nonuniform, small, or thin shape to configure their shape to be uniform and of a specific size, coated seeds have the advantage of being easier to handle. With the coated seeds, not only do workability during sowing and positional stability after sowing become good, but it can also be expected to improve germination rates and promote growth due to the effects of materials with various functions such as clay minerals and inorganic materials.

A binder may be used for the purpose of improving adhesion when coating the above-mentioned carrier onto seeds. The binder may be used not only for coated seeds but also for film-coated seeds (Patent Document 1). As the film-coated seed, one that is coated with a water-soluble polymer in the form of a film has been proposed (Patent Document 2). Since film-coated seeds may also contain drugs (agricultural chemicals, bactericides, etc.) in addition to the carrier, there is a demand for a binder that strongly bonds with both the carrier and the drug. In the present disclosure, in the case of simply describing "coated seed", it is used in a meaning including both "coating seed" and "film-coated seed".

### Related Art Documents

### Patent Documents

Patent Document 1: Publication of Japanese Patent Application Laid-Open No. 2007-077118
Patent Document 2: Specification of U.S. Patent No. 3,598,565

### DISCLOSURE OF INVENTION

Coated seeds require resistance against peel-off of the composition for seed coating during transportation and sowing processes. If the composition for seed coating peels off, not only will the above-mentioned benefits be lost, but the composition for seed coating peeled off may cause clogging in a piping or a rotational mechanism part during transportation and sowing processes. In addition, in the case where the composition for seed coating peels off, collisions between seeds or between seeds and the container containing them may lead to seed damage. For these reasons, peel-off of the composition for seed coating should be suppressed as much as possible. Furthermore, depending on the binder used in the composition for seed coating, the coating property of the composition with respect to the seeds may be insufficient.

Thus, the present invention aims to provide a binder for seed coating capable of providing a composition for seed coating with good strength and excellent coating property with respect to seeds.

In addition, the present invention aims to provide a composition for seed coating with good strength and excellent coating property with respect to seeds. Furthermore, the present invention aims to provide a coated seed with good strength, a method for producing a coated seed, and a cultivation method.

As a result of intensive research, the present inventors have found that the above issues can be solved by specific binder for seed coating, composition for seed coating, coated seed, method for producing a coated seed, and cultivation method. The present invention has been made to solve at least some of the above issues and is capable of being realized in the following aspects or application examples.

### (Item 1)

A binder (A) for seed coating containing:
a (meth)acrylamide-based polymer (a1) which is a reaction product of a monomer group containing (meth)acrylamide (a1-1), where
a content (solid content conversion) of the component (a1-1) in a total amount of 100 mol% (solid content conversion) of the monomer group of the component (a1) is 30 mol% or more, and
a weight average molecular weight of the component (a1) is 100,000 or more and 10,000,000 or less.

### (Item 2)

The binder (A) for seed coating according to item 1, where the monomer group of the component (a1) contains a polymerizable monomer having a sulfonic acid group which is a chain transfer agent (a1-2).

### (Item 3)

A composition for seed coating, containing the binder (A) for seed coating according to item 1 or 2 and a carrier (B).

### (Item 4)

A coated seed, coated with the composition for seed coating according to item 3.

### (Item 5)

A method for producing a coated seed, including a process of mixing the binder (A) for seed coating according to item 1 or 2 and a carrier (B) with a seed.

### (Item 6)

A cultivation method, including a process of sowing the coated seed according to item 4 in soil.

### EMBODIMENTS FOR IMPLEMENTING INVENTION

Throughout the present disclosure, a range of each physical property value, content, etc. may be appropriately set (e.g., by selecting from values of the upper limit and the lower limit described in each item below). Specifically, for a numerical value α, in the case where A1, A2, A3, etc. are exemplified as the lower limit of the numerical value α, and B1, B2, B3, etc. are exemplified as the upper limit of the numerical value α, the range of the numerical value α may be exemplified as A1 or more, A2 or more, A3 or more, B1 or less, B2 or less, B3 or less, A1 to B 1, A1 to B2, A1 to B3, A2 to B1, A2 to B2, A2 to B3, A3 to B1, A3 to B2, A3 to B3, etc. In the present disclosure, the expression "A to B" is used in a meaning including the numerical values of "A" and "B" as the lower limit value and the upper limit value.

"(Meth)acryl" means "at least one selected from the group consisting of acryl and methacryl". "(Meth)acrylate" means "at least one selected from the group consisting of acrylate and methacrylate". "(Meth)acryloyl" means "at least one selected from the group consisting of acryloyl and methacryloyl". Hereinafter, constituent elements, production methods, etc. of the present disclosure will be described in detail.

### [Binder (A) for seed coating]

The present disclosure relates to a binder (A) for seed coating (also referred to as "component (A)" in the present disclosure) containing:
a (meth)acrylamide-based polymer (a1) which is a reaction product of a monomer group containing (meth)acrylamide (a1-1), and
a content (solid content conversion) of the component (a1-1) in a total amount of 100 mol% (solid content conversion) of the monomer group of the component (a1) is 30 mol% or more, and
a weight average molecular weight of the component (a1) is 100,000 or more and 10,000,000 or less.

The component (A) is a binder for seed coating containing a (meth)acrylamide-based polymer (a1) (also referred to as "component (a1)" in the present disclosure) which is a reaction product of a monomer group containing (meth)acrylamide (a1-1) (also referred to as "component (a1-1)" in the present disclosure). In addition, the content (solid content conversion) of the component (a1-1) in the total amount of 100 mol% (solid content conversion) of the monomer group of the component (a1) is 30 mol% or more, and the weight average molecular weight of the component (a1) is 100,000 or more and 10,000,000 or less.

### <Component (a1)>

The component (a1) is a reaction product of a monomer group containing the component (a1-1).

### <Component (a1-1)>

The component (a1-1) is methacrylamide and/or acrylamide.

The upper limit of the content (solid content conversion) of the component (a1-1) in the total amount of 100 mol% (solid content conversion) of the monomer group of the component (a1) may be exemplified as 100 mol%, 98 mol%, 95 mol%, 90 mol%, 85 mol%, 80 mol%, 75 mol%, 70 mol%, 65 mol%, 60 mol%, 55 mol%, 50 mol%, 45 mol%, 40 mol%, 35 mol%, etc., and the lower limit may be exemplified as 98 mol%, 95 mol%, 90 mol%, 85 mol%, 80 mol%, 75 mol%, 70 mol%, 65 mol%, 60 mol%, 55 mol%, 50 mol%, 45 mol%, 40 mol%, 35 mol%, 30 mol%, etc. In an embodiment, the content (solid content conversion) of the component (a1-1) in the total amount of 100 mol% (solid content conversion) of the monomer group of the component (a1) may be preferably exemplified as about 30 to 100 mol%, more preferably about 50 to 100 mol%, and even more preferably about 50 to 95 mol%, for being excellent in the strength of the composition for seed coating.

### <Component (a1-2)>

In an embodiment, the component (a1) may optionally contain a chain transfer agent (a1-2) (also referred to as "component (a1-2)" in the present disclosure) as the monomer group which is a constituent element thereof. By containing the component (a1-2) in the monomer group of the component (a1), the strength of the composition for seed coating of the present disclosure becomes better.

As the component (a1-2), a chain transfer agent having a polymerizable unsaturated group and a chain transfer agent not having a polymerizable unsaturated group may be exemplified. As the chain transfer agent having a polymerizable unsaturated group, one or more selected from a polymerizable monomer having a sulfonic acid group, α-methylstyrene dimer, and 2,4-diphenyl-4-methyl-1-pentene may be exemplified. As the chain transfer agent not having a polymerizable unsaturated group, one or more selected from a compound having a thiol but not having a polymerizable unsaturated group, alcohols not having a polymerizable unsaturated group, carbon tetrachloride, ethylbenzene, isopropylbenzene, and cumene may be exemplified. In the present disclosure, a polymerizable unsaturated group refers to a carbon-carbon double bond or a carbon-carbon triple bond.

As the polymerizable monomer having a sulfonic acid group, one or more selected from (meth)allylsulfonic acid and (meth)allylsulfonic acid salt may be exemplified. (Meth)allylsulfonic acid means methallylsulfonic acid and/or allylsulfonic acid.

As the (meth)allylsulfonic acid salt, one or more selected from sodium (meth)allylsulfonate, potassium (meth)allylsulfonate, and ammonium (meth)allylsulfonate may be exemplified.

As the compound having a thiol but not having a polymerizable unsaturated group, one or more selected from 2-mercaptoethanol, 1-butanethiol, cyclohexanethiol, n-dodecyl mercaptan, sodium 3-mercapto-1-propanesulfonate, 1-thioglycerol, β-mercaptopropionic acid, 2-ethylhexyl-3-mercaptopropionate, methoxybutyl-β-mercaptopropionate, and stearyl-3-mercaptopropionate may be exemplified.

As alcohols not having a polymerizable unsaturated group, one or more selected from ethanol, isopropyl alcohol, and pentanol may be exemplified.

In an embodiment, for being excellent in the strength of the composition for seed coating, the component (a1-2) is preferably a chain transfer agent having a polymerizable unsaturated group, more preferably a polymerizable monomer having a sulfonic acid group, even more preferably (meth)allylsulfonic acid salt, and particularly preferably sodium methallylsulfonate.

The upper limit of the molecular weight of the component (a1-2) may be exemplified as 1,000, 950, 900, 850, 800, 750, 700, 650, 600, 550, 500, 450, 400, 350, 300, 250, 200, 150, 100, 50, 25, etc., and the lower limit may be exemplified as 950, 900, 850, 800, 750, 700, 650, 600, 550, 500, 450, 400, 350, 300, 250, 200, 150, 100, 50, 25, 10, etc. In an embodiment, the molecular weight of the component (a1-2) may be preferably exemplified as 10 to 1,000. In the present disclosure, in the case of simply referring to the molecular weight, it refers to a value calculated based on atomic weight.

The upper limit of the content ratio (molar ratio, solid content conversion, [component (a1-1)/component (a1-2)]) between the component (a1-1) and the component (a1-2) may be exemplified as 100/0, 99.99/0.01, 99.9/0.1, 99.5/0.5, 99/1, 95/5, 90/10, 85/15, 80/20, 75/25, 70/30, 65/35, 60/40, 55/45, etc., and the lower limit may be exemplified as 99.9/0.1, 99.5/0.5, 99/1, 95/5, 90/10, 85/15, 80/20, 75/25, 70/30, 65/35, 60/40, 55/45, 50/50, etc. In an embodiment, the content ratio (molar ratio, solid content conversion, [component (a1-1)/component (a1-2)]) between the component (a1-1) and the component (a1-2) is preferably about 90/10 to 99.99/0.01.

The upper limit of the content (solid content conversion) of the component (a1-2) in the total amount of 100 mol% (solid content conversion) of the monomer group of the component (a1) may be exemplified as 50 mol%, 45 mol%, 40 mol%, 35 mol%, 30 mol%, 25 mol%, 20 mol%, 15 mol%, 10 mol%, 5 mol%, 2 mol%, 1.9 mol%, 1.8 mol%, 1.7 mol%, 1.6 mol%, 1.5 mol%, 1.4 mol%, 1.3 mol%, 1.2 mol%, 1.1 mol%, 1.0 mol%, 0.9 mol%, 0.8 mol%, 0.7 mol%, 0.6 mol%, 0.5 mol%, 0.4 mol%, 0.3 mol%, 0.2 mol%, 0.1 mol%, 0.05 mol%, etc., and the lower limit may be exemplified as 45 mol%, 40 mol%, 35 mol%, 30 mol%, 25 mol%, 20 mol%, 15 mol%, 10 mol%, 5 mol%, 2 mol%, 1.9 mol%, 1.8 mol%, 1.7 mol%, 1.6 mol%, 1.5 mol%, 1.4 mol%, 1.3 mol%, 1.2 mol%, 1.1 mol%, 1.0 mol%, 0.9 mol%, 0.8 mol%, 0.7 mol%, 0.6 mol%, 0.5 mol%, 0.4 mol%, 0.3 mol%, 0.2 mol%, 0.1 mol%, 0.05 mol%, 0 mol%, etc. In an embodiment, the content (solid content conversion) of the component (a1-2) in the total amount of 100 mol% (solid content conversion) of the monomer group of the component (a1) may be preferably exemplified as about 0 to 50 mol%, more preferably about 0.05 to 10 mol%, and even more preferably about 0.05 to 1.5 mol%, for being excellent in the strength of the composition for seed coating.

### <Component (a1-3)>

In an embodiment, the component (a1) may optionally contain a polymerizable monomer (a1-3) having a cationic group (also referred to as "component (a1-3)" in the present disclosure) as the monomer group which is the constituent element thereof. However, even as a polymerizable monomer having a cationic group, a monomer that creates a chain transfer effect is classified as the component (a1-2).

As the component (a1-3), one or more selected from a polymerizable monomer having a tertiary amino group and a quaternary salt of a polymerizable monomer having a tertiary amino group may be exemplified.

As the polymerizable monomer having a tertiary amino group, one or more selected from N,N-dimethylaminoethyl (meth)acrylate, N,N-diethylaminoethyl (meth)acrylate, N,N-dimethylaminopropyl (meth)acrylamide, and N,N-diethylaminopropyl (meth)acrylamide may be exemplified.

The quaternary salt of a polymerizable monomer having a tertiary amino group may be obtained by reacting a polymerizable monomer having a tertiary amino group with a quaternizing agent. As the quaternary salt, one or more selected from an inorganic acid salt and an organic acid salt may be exemplified. As the inorganic acid salt, one or more selected from hydrochloride and sulfate may be exemplified. As the organic acid salt, acetate may be exemplified. As the quaternizing agent, one or more selected from methyl chloride, benzyl chloride, dimethyl sulfate, and epichlorohydrin may be exemplified.

The upper limit of the molecular weight of the component (a1-3) may be exemplified as 1,000, 950, 900, 850, 800, 750, 700, 650, 600, 550, 500, 450, 400, 350, 300, 250, 200, 150, 100, 50, 25, etc., and the lower limit may be exemplified as 950, 900, 850, 800, 750, 700, 650, 600, 550, 500, 450, 400, 350, 300, 250, 200, 150, 100, 50, 25, 10, etc. In an embodiment, the molecular weight of the component (a1-3) may be preferably exemplified as 10 to 1,000.

The upper limit of the content (solid content conversion) of the component (a1-3) in the total amount of 100 mol% (solid content conversion) of the monomer group of the component (a1) may be exemplified as 50 mol%, 45 mol%, 40 mol%, 35 mol%, 30 mol%, 25 mol%, 20 mol%, 19 mol%, 18 mol%, 17 mol%, 16 mol%, 15 mol%, 14 mol%, 13 mol%, 12 mol%, 11 mol%, 10 mol%, 9 mol%, 8 mol%, 7 mol%, 6 mol%, 5 mol%, 4 mol%, 3 mol%, 2 mol%, 1 mol%, 0.5 mol%, 0.1 mol%, 0.05 mol%, 0.01 mol%, etc., and the lower limit may be exemplified as 45 mol%, 40 mol%, 35 mol%, 30 mol%, 25 mol%, 20 mol%, 19 mol%, 18 mol%, 17 mol%, 16 mol%, 15 mol%, 14 mol%, 13 mol%, 12 mol%, 11 mol%, 10 mol%, 9 mol%, 8 mol%, 7 mol%, 6 mol%, 5 mol%, 4 mol%, 3 mol%, 2 mol%, 1 mol%, 0.5 mol%, 0.1 mol%, 0.05 mol%, 0.01 mol%, 0 mol%, etc. In an embodiment, the content (solid content conversion) of the component (a1-3) in the total amount of 100 mol% (solid content conversion) of the monomer group of the component (a1) may be preferably exemplified as about 0 to 50 mol%, and more preferably about 2 to 20 mol%, for being excellent in the strength of the composition for seed coating.

### <Component (a1-4)>

In an embodiment, the component (a1) may optionally contain a polymerizable monomer (a1-4) having an anionic group (also referred to as "component (a1-4)" in the present disclosure) as the monomer group which is the constituent element thereof. However, even as a polymerizable monomer having an anionic group, a monomer that creates a chain transfer effect is classified as the component (a1-2).

As the component (a1-4), a polymerizable monomer having a carboxyl group, a polymerizable monomer having a sulfonic acid group, etc. may be exemplified.

As the polymerizable monomer having a carboxyl group, one or more selected from α,β-unsaturated monocarboxylic acid, α,β-unsaturated dicarboxylic acid, alkali metal salts of these acids, and alkaline earth metal salts of these acids may be exemplified.

As the α,β-unsaturated monocarboxylic acid, one or more selected from (meth)acrylic acid and crotonic acid may be exemplified.

As the α,β-unsaturated dicarboxylic acid, one or more selected from maleic acid, fumaric acid, itaconic acid, muconic acid, and citraconic acid may be exemplified.

As the polymerizable monomer having a sulfonic acid group, one or more selected from vinylsulfonic acid and styrenesulfonic acid may be exemplified.

The upper limit of the molecular weight of the component (a1-4) may be exemplified as 1,000, 950, 900, 850, 800, 750, 700, 650, 600, 550, 500, 450, 400, 350, 300, 250, 200, 150, 100, 50, 25, etc., and the lower limit may be exemplified as 950, 900, 850, 800, 750, 700, 650, 600, 550, 500, 450, 400, 350, 300, 250, 200, 150, 100, 50, 25, 10, etc. In an embodiment, the molecular weight of the component (a1-4) may be preferably exemplified as 10 to 1,000.

The upper limit of the content ratio (molar ratio, solid content conversion, [component (a1-3)/component (a1-4)]) between the component (a1-3) and the component (a1-4) may be exemplified as 100/0, 99/1, 95/5, 90/10, 85/15, 80/20, 75/25, 70/30, 65/35, 60/40, 55/45, 50/50, 45/55, 40/60, 35/65, 30/70, 25/75, 20/80, 15/85, 10/90, 5/95, 1/99, etc., and the lower limit may be exemplified as 99/1, 95/5, 90/10, 85/15, 80/20, 75/25, 70/30, 65/35, 60/40, 55/45, 50/50, 45/55, 40/60, 35/65, 30/70, 25/75, 20/80, 15/85, 10/90, 5/95, 1/99, 0/100, etc.

The upper limit of the content (solid content conversion) of the component (a1-4) in the total amount of 100 mol% (solid content conversion) of the monomer group of the component (a1) may be exemplified as 55 mol%, 50 mol%, 45 mol%, 40 mol%, 35 mol%, 30 mol%, 25 mol%, 20 mol%, 19 mol%, 18 mol%, 17 mol%, 16 mol%, 15 mol%, 14 mol%, 13 mol%, 12 mol%, 11 mol%, 10 mol%, 9 mol%, 8 mol%, 7 mol%, 6 mol%, 5 mol%, 4 mol%, 3 mol%, 2 mol%, 1 mol%, 0.5 mol%, 0.1 mol%, 0.05 mol%, 0.01 mol%, etc., and the lower limit may be exemplified as 50 mol%, 45 mol%, 40 mol%, 35 mol%, 30 mol%, 25 mol%, 20 mol%, 19 mol%, 18 mol%, 17 mol%, 16 mol%, 15 mol%, 14 mol%, 13 mol%, 12 mol%, 11 mol%, 10 mol%, 9 mol%, 8 mol%, 7 mol%, 6 mol%, 5 mol%, 4 mol%, 3 mol%, 2 mol%, 1 mol%, 0.5 mol%, 0.1 mol%, 0.05 mol%, 0.01 mol%, 0 mol%, etc. In an embodiment, the content (solid content conversion) of the component (a1-4) in the total amount of 100 mol% (solid content conversion) of the monomer group of the component (a1) may be preferably exemplified as about 0 to 55 mol%, more preferably about 2 to 35 mol%, and even more preferably about 2 to 15 mol%, for being excellent in the strength of the composition for seed coating.

### <Component (a1-5)>

In an embodiment, the component (a1) may optionally contain a crosslinkable monomer (a1-5) (also referred to as "component (a1-5)" in the present disclosure) as the monomer group which is the constituent element thereof. However, even as a crosslinkable monomer, a monomer that creates a chain transfer effect is classified as the component (a1-2).

As the component (a1-5), one or more selected from divinyl ester, polyethylene glycol mono(meth)acrylate, polyethylene glycol di(meth)acrylate, polyalkylene glycol mono(meth)acrylate, N-substituted (meth)acrylamide, N,N-substituted (meth)acrylamide, N,N'-substituted (meth)acrylamide, aromatic polyvinyl, allyl (meth)acrylate, and triacryl formal may be exemplified.

As the divinyl ester, one or more selected from divinyl adipate and divinyl sebacate may be exemplified.

As the polyethylene glycol mono(meth)acrylate, one or more selected from diethylene glycol mono(meth)acrylate, triethylene glycol mono(meth)acrylate, and tetraethylene glycol mono(meth)acrylate may be exemplified.

As the polyethylene glycol di(meth)acrylate, one or more selected from ethylene glycol di(meth)acrylate and diethylene glycol di(meth)acrylate may be exemplified.

As the polyalkylene glycol mono(meth)acrylate, one or more selected from polypropylene glycol mono(meth)acrylate, methoxy polyethylene glycol mono(meth)acrylate, polytrimethylene glycol mono(meth)acrylate, polytetramethylene glycol mono(meth)acrylate, and polyethylene glycol propylene glycol mono(meth)acrylate may be exemplified.

As the N-substituted (meth)acrylamide, one or more selected from N-(1,1-dimethyl-3-oxobutyl)acrylamide, N-isopropylacrylamide, N-methylolacrylamide, N-allyl(meth)acrylamide, 2-acrylamido-2-methylpropanesulfonic acid, and salts thereof may be exemplified.

As the N,N-substituted (meth)acrylamide, one or more selected from N,N-dimethylacrylamide, N,N-diethylacrylamide, and N,N-diallyl(meth)acrylamide may be exemplified.

As the N,N'-substituted (meth)acrylamide, one or more selected from N,N'-methylenebis(meth)acrylamide and N,N'-ethylenebis(meth)acrylamide may be exemplified.

As the aromatic polyvinyl, one or more selected from divinylbenzene, 1,3,5-triacryloylhexahydro-1,3,5-triazine, triallyl isocyanurate, triallyl trimellitate, triallylamine, tetramethylolmethane tetraacrylate, and tetraallyl pyromellitate may be exemplified.

The upper limit of the molecular weight of the component (a1-5) may be exemplified as 1,000, 950, 900, 850, 800, 750, 700, 650, 600, 550, 500, 450, 400, 350, 300, 250, 200, 150, 100, 50, 25, etc., and the lower limit may be exemplified as 950, 900, 850, 800, 750, 700, 650, 600, 550, 500, 450, 400, 350, 300, 250, 200, 150, 100, 50, 25, 10, etc. In an embodiment, the molecular weight of the component (a1-5) may be preferably exemplified as 10 to 1,000.

The upper limit of the content (solid content conversion) of the component (a1-5) in the total amount of 100 mol% (solid content conversion) of the monomer group of the component (a1) may be exemplified as 5.0 mol%, 4.5 mol%, 4.0 mol%, 3.5 mol%, 3.0 mol%, 2.5 mol%, 2.0 mol%, 1.9 mol%, 1.8 mol%, 1.7 mol%, 1.5 mol%, 1.4 mol%, 1.3 mol%, 1.2 mol%, 1.1 mol%, 1.0 mol%, 0.9 mol%, 0.8 mol%, 0.7 mol%, 0.6 mol%, 0.5 mol%, 0.4 mol%, 0.3 mol%, 0.2 mol%, 0.1 mol%, 0.05 mol%, 0.01 mol%, 0.005 mol%, etc., and the lower limit may be exemplified as 4.5 mol%, 4.0 mol%, 3.5 mol%, 3.0 mol%, 2.5 mol%, 2.0 mol%, 1.9 mol%, 1.8 mol%, 1.7 mol%, 1.5 mol%, 1.4 mol%, 1.3 mol%, 1.2 mol%, 1.1 mol%, 1.0 mol%, 0.9 mol%, 0.8 mol%, 0.7 mol%, 0.6 mol%, 0.5 mol%, 0.4 mol%, 0.3 mol%, 0.2 mol%, 0.1 mol%, 0.05 mol%, 0.01 mol%, 0.005 mol%, 0 mol%, etc. In an embodiment, the content (solid content conversion) of the component (a1-5) in the total amount of 100 mol% (solid content conversion) of the monomer group of the component (a1) may be preferably exemplified as about 0 to 5.0 mol%, and more preferably about 0.005 to 1.5 mol%, for being excellent in the strength of the composition for seed coating.

The upper limit of the weight average molecular weight of the component (a1) may be exemplified as 10,000,000, 9,500,000, 9,000,000, 8,500,000, 8,000,000, 7,500,000, 7,000,000, 6,500,000, 6,000,000, 5,500,000, 5,000,000, 4,500,000, 4,000,000, 3,500,000, 3,000,000, 2,500,000, 2,000,000, 1,500,000, 1,000,000, 950,000, 900,000, 850,000, 800,000, 750,000, 700,000, 650,000, 600,000, 550,000, 500,000, 450,000, 400,000, 350,000, 300,000, 250,000, 200,000, 150,000, etc., and the lower limit may be exemplified as 9,500,000, 9,000,000, 8,500,000, 8,000,000, 7,500,000, 7,000,000, 6,500,000, 6,000,000, 5,500,000, 5,000,000, 4,500,000, 4,000,000, 3,500,000, 3,000,000, 2,500,000, 2,000,000, 1,500,000, 1,000,000, 950,000, 900,000, 850,000, 800,000, 750,000, 700,000, 650,000, 600,000, 550,000, 500,000, 450,000, 400,000, 350,000, 300,000, 250,000, 200,000, 150,000, 100,000, etc. In an embodiment, the weight average molecular weight of the component (a1) may be preferably exemplified as about 100,000 to 5,000,000, for being excellent in the strength of the composition for seed coating and being excellent in the coating property of the composition for seed coating with respect to seeds.

### <Other additives>

In an embodiment, various additives may be optionally used in the production of the component (a1). As the additives, an organic acid (citric acid, succinic acid, oxalic acid, etc.), an inorganic acid (hydrochloric acid, sulfuric acid, phosphoric acid, etc.), an inorganic base (sodium hydroxide, potassium hydroxide, calcium hydroxide, etc.), a water-soluble aluminum compound, mirabilite, urea, polysaccharides (starch and the like), a defoaming agent, an antioxidant, a polymerization inhibitor, a preservative, etc. may be exemplified. In the case of using additives in the production of the component (a1), the upper limit of the content of the additives may be exemplified as 10 mass%, 5 mass%, 4 mass%, 3 mass%, 2 mass%, 1 mass%, 0.5 mass% (solid content conversion), etc., and the lower limit may be exemplified as 5 mass%, 4 mass%, 3 mass%, 2 mass%, 1 mass%, 0.5 mass%, 0.1 mass% (solid content conversion), etc., with respect to 100 mass% (solid content conversion) of all constituent monomers of the component (a1).

### <Production of component (a1)

As a polymerization method of the component (a1), a method such as including the component (a1-1), and as needed, the component (a1-2), the component (a1-3), the component (a1-4), the component (a1-5), and additives, and polymerizing these components in a solvent may be exemplified.

As the polymerization method, a method using only a dropping polymerization method, a method combining a simultaneous polymerization method (loading monomer mixture liquids all at once) and the dropping polymerization method, etc. may be exemplified.

The dropping polymerization method is a method of dropping a monomer mixture liquid into a reaction system containing a solvent. As the method using only the dropping polymerization method,
(1) a method of dropping a monomer mixture liquid obtained by mixing all monomer components into the reaction system,
(2) a method of preparing multiple monomer mixture liquids separately and then dropping the monomer mixture liquids simultaneously into the reaction system,
(3) a method of preparing multiple monomer mixture liquids separately and then dropping the monomer mixture liquids sequentially into the reaction system, etc.
   may be exemplified.
   The dropping may be performed continuously, or the dropping may be stopped during the process to allow polymerization for a specific period of time, and then resumed.
   As the method combining the simultaneous polymerization method and the dropping polymerization method,
(4) a method of simultaneously polymerizing each monomer mixture liquid separately and then mixing each polymer,
(5) a method of completing the simultaneous polymerization of one or more monomer mixture liquids, and then dropping the remaining monomer mixture liquid,
(6) a method of simultaneously polymerizing one or more monomer mixture liquids, and during the process, dropping and polymerizing the remaining monomer mixture liquid,
(7) a method of dropping and polymerizing one or more monomer mixture liquids, adding the remaining monomer mixture liquid all at once, and then performing simultaneous polymerization, etc.
may be exemplified.

When preparing multiple monomer mixture liquids, it is more preferable to perform an operation such that the concentration of the component (a1-2), the component (a1-3), the component (a1-4), or the component (a1-5) involved in the reaction becomes higher in any of the monomer mixture liquids, such as increasing the amount of the component (a1-2), the component (a1-3), the component (a1-4), or the component (a1-5) in a part of the mixture liquids and reacting the mixture liquids sequentially, or adding the component (a1-2), the component (a1-3), the component (a1-4), or the component (a1-5) at a specific time point during the polymerization reaction. In addition, the component (a1) may be synthesized without mixing the component (a1-2), to reduce or eliminate branching in the component (a1). In the present disclosure, including the component (a1-2) as a monomer constituting the component (a1) to configure the component (a1) as a branched (meth)acrylamide-based polymer is preferable, since it becomes less likely for the component (A) and a component (B) to peel off from the seed (i.e., the strength of the composition for seed coating becomes good).

As the solvent in the production of the component (a1), water, an organic solvent, etc. may be exemplified. As the organic solvent, alcohols (methanol, ethanol, n-propyl alcohol, isopropyl alcohol, n-butyl alcohol, sec-butyl alcohol, t-butyl alcohol, isobutyl alcohol, n-hexyl alcohol, n-octyl alcohol, ethylene glycol, propylene glycol, diethylene glycol, triethylene glycol, diacetone alcohol, etc.), ethers (ethylene glycol monobutyl ether, propylene glycol monomethyl ether, propylene glycol monoethyl ether, etc.), etc. may be exemplified. In an embodiment, from the viewpoint of dissolving the components (a1-1) to (a1-5), water may be preferably exemplified as the solvent in the production of the component (a1).

As the polymerization initiator, persulfate (ammonium persulfate, potassium persulfate, sodium persulfate, etc.), azo-based compound (2,2'-azobis(2-amidinopropane) hydrochloride, 2,2'-azobis[2(2-imidazolin-2-yl)propane] hydrochloride, etc.), etc. may be exemplified. From the viewpoint of sufficiently enabling solution polymerization, the polymerization initiator is preferably one or more selected from ammonium persulfate, potassium persulfate, and 2,2'-azobis(2-amidinopropane) hydrochloride. As a method of adding the polymerization initiator, batch addition, split addition, continuous dropping, etc. may be exemplified. The upper limit of the content (solid content conversion) of the polymerization initiator with respect to 100 mass% (solid content conversion) of all constituent monomers of the component (a1) may be exemplified as 5 mass%, 4 mass%, 3 mass%, 2 mass%, 1 mass%, 0.5 mass%, 0.1 mass%, 0.05 mass%, 0.01 mass%, 0.005 mass%, etc., and the lower limit may be exemplified as 4 mass%, 3 mass%, 2 mass%, 1 mass%, 0.5 mass%, 0.1 mass%, 0.05 mass%, 0.01 mass%, 0.005 mass%, 0.001 mass%, etc. In an embodiment, the content (solid content conversion) of the polymerization initiator with respect to 100 mass% (solid content conversion) of all constituent monomers of the component (a1) may be preferably exemplified as about 0.001 to 5 mass%.

The polymerization conditions are a temperature of about 50 to 100°C and a time of about 1 to 8 hours.

In an embodiment, the component (A) may optionally include other agents (e.g., another binder) other than the component (a1) within a range that does not impair the effects of the present disclosure. As the another binder, carboxymethyl cellulose, hydroxymethyl cellulose, hydroxypropyl cellulose, methyl cellulose, starch, pullulan, gum arabic, polyvinyl alcohol, gelatin, polyvinylpyrrolidone, polyacrylic acid, polyethylene glycol, alginic acid, etc. may be exemplified.

In the case of adding other agents other than the component (a1) to the component (A), with respect to the total amount of 100 mass% (solid content conversion) of the component (A), the upper limit of the content (solid content conversion) of the other agents other than the component (a1) may be exemplified as 99 mass%, 95 mass%, 90 mass%, 85 mass%, 80 mass%, 75 mass%, 70 mass%, 65 mass%, 60 mass%, 55 mass%, 50 mass%, 45 mass%, 40 mass%, 35 mass%, 30 mass%, 25 mass%, 20 mass%, 15 mass%, 10 mass%, 5 mass%, 1 mass%, 0.1 mass%, 0.05 mass%, 0.01 mass%, etc., and the lower limit may be exemplified as 95 mass%, 90 mass%, 85 mass%, 80 mass%, 75 mass%, 70 mass%, 65 mass%, 60 mass%, 55 mass%, 50 mass%, 45 mass%, 40 mass%, 35 mass%, 30 mass%, 25 mass%, 20 mass%, 15 mass%, 10 mass%, 5 mass%, 1 mass%, 0.1 mass%, 0.05 mass%, 0.01 mass%, 0.005 mass%, etc. In an embodiment, in the case of adding other agents other than the component (a1) to the component (A), with respect to the total amount of 100 mass% (solid content conversion) of the component (A), the content (solid content conversion) of the other agents other than the component (a1) may be preferably exemplified as about 0.005 to 99 mass%.

The upper limit of the content (solid content conversion) of the component (a1) in the total amount of 100 mass% (solid content conversion) of the component (A) may be exemplified as 100 mass%, 99 mass%, 95 mass%, 90 mass%, 85 mass%, 80 mass%, 75 mass%, 70 mass%, 65 mass%, 60 mass%, 55 mass%, 50 mass%, 45 mass%, 40 mass%, 35 mass%, 30 mass%, 25 mass%, 20 mass%, 15 mass%, 10 mass%, 5 mass%, etc., and the lower limit may be exemplified as 99 mass%, 95 mass%, 90 mass%, 85 mass%, 80 mass%, 75 mass%, 70 mass%, 65 mass%, 60 mass%, 55 mass%, 50 mass%, 45 mass%, 40 mass%, 35 mass%, 30 mass%, 25 mass%, 20 mass%, 15 mass%, 10 mass%, 5 mass%, 1 mass%, etc. In an embodiment, the content (solid content conversion) of the component (a1) in the total amount of 100 mass% (solid content conversion) of the component (A) may be preferably exemplified as about 1 to 100 mass%.

### [Use of composition containing component (a1)]

The present disclosure relates to a use of a composition containing the component (a1) as a binder for seed coating.

In addition, the present disclosure relates to a use of a composition containing the component (a1) for producing a composition for seed coating.

In an embodiment, the composition containing the component (a1) may optionally include the additives used in the production of the component (a1), the solvent used in the production of the component (a1), and the another binder described above, within a range that does not impair the effects of the present disclosure.

### [Composition for seed coating]

The present disclosure relates to a composition for seed coating containing the component (A) and a carrier (B) (also referred to as "component (B)" in the present disclosure).

The upper limit of the content (solid content conversion) of the component (A) in 100 mass% (solid content conversion) of the composition for seed coating may be exemplified as 99 mass%, 95 mass%, 90 mass%, 85 mass%, 80 mass%, 75 mass%, 70 mass%, 65 mass%, 60 mass%, 55 mass%, 50 mass%, 45 mass%, 40 mass%, 35 mass%, 30 mass%, 25 mass%, 20 mass%, 15 mass%, 10 mass%, 5 mass%, 1 mass%, 0.5 mass%, etc., and the lower limit may be exemplified as 95 mass%, 90 mass%, 85 mass%, 80 mass%, 75 mass%, 70 mass%, 65 mass%, 60 mass%, 55 mass%, 50 mass%, 45 mass%, 40 mass%, 35 mass%, 30 mass%, 25 mass%, 20 mass%, 15 mass%, 10 mass%, 5 mass%, 1 mass%, 0.5 mass%, 0.1 mass%, etc. In an embodiment, the content (solid content conversion) of the component (A) in 100 mass% (solid content conversion) of the composition for seed coating may be preferably exemplified as about 0.1 to 99 mass%, and more preferably about 0.5 to 10 mass%, for being excellent in the strength of the composition for seed coating.

### <Component (B)>

The component (B) is a carrier. In the present disclosure, the carrier may not only have the effect of adhering to the seed and configuring the seed to a size easier to handle, but may also create various effects (e.g., an effect of promoting growth of seed, an effect of repelling various animals). As the carrier, one or more selected from a mineral (an organic mineral, an inorganic minerals, etc.), carbon, and a biological material may be exemplified.

As the organic mineral, one or more selected from abelsonite, acetamide, calclacite, caoxite, coskrenite-(Ce), dashkovaite, earlandite, evenkite, fichtelite, flagstaffite, formicaite, glushinskite, guanine, hartite, hoelite, hoganite, humboldtine, idrialite, karpatite, kladnoite, kratochvilite, levinsonite-(Y), lindbergite, mellite, minguzzite, moolooite, natroxalate, novgorodovaite, oxammite, paceite, ravatite, refikite, simonellite, stepanovite, uricite, urea, weddellite, wheatleyite, whewellite, zhemchuzhnikovite, and zugshunstite-(Ce) may be exemplified.

As the inorganic mineral, one or more selected from a natural mineral, a synthetic minerals, and a mixture containing one or more of these may be exemplified.

As the natural mineral, one or more selected from a rock-forming mineral, a contact mineral, an ore mineral, and a clay mineral may be exemplified.

As the rock-forming mineral, one or more selected from an igneous rock, a sedimentary rock, and a metamorphic rock may be exemplified.

As the igneous rock, one or more selected from a volcanic rock and a plutonic rock may be exemplified.

As the volcanic rock, one or more selected from kimberlite, basalt, andesite, dacite, and rhyolite may be exemplified.

As the plutonic rock, one or more selected from peridotite, gabbro, diorite, granodiorite, and granite may be exemplified.

As the granite, one or more selected from quartz, feldspar, mica, hornblende, pyroxene, and olivine may be exemplified.

As the sedimentary rock, one or more selected from a clastic rock, a volcaniclastic rock, a biogenic rock, and an evaporite rock may be exemplified.

As the clastic rock, one or more selected from conglomerate, breccia, sandstone, mudstone, shale, and slate may be exemplified.

As the volcaniclastic rock, one or more selected from volcanic breccia, tuff breccia, lapillistone, lapilli tuff, and tuff may be exemplified.

As the biogenic rock, one or more selected from limestone, dolomite, chert, diatomaceous earth, and coal may be exemplified.

As the evaporite rock, one or more selected from rock salt and gypsum may be exemplified.

As the metamorphic rock, one or more selected from a contact metamorphic rock, a regional metamorphic rock, a dynamic metamorphic rock, and an impact metamorphic rock may be exemplified.

As the contact mineral, a skarn mineral (garnet, pyroxene, vesuvianite, wollastonite, etc.) and the like may be exemplified.

As the ore mineral, one or more selected from chalcopyrite, galena, and sphalerite may be exemplified.

As the clay mineral, one or more selected from smectite group, kaolinite group, sericite group, illite group, glauconite group, chlorite group, talc group, zeolite group, and mixed clay may be exemplified.

As the smectite group, one or more selected from montmorillonite, beidellite, hectorite, saponite, and stevensite may be exemplified.

As the kaolinite group, one or more selected from kaolinite, dickite, nacrite, halloysite, antigorite, clinochrysotile, orthochrysotile, parachrysotile, lizardite, amesite, kellyite, berthierine, greenalite, nepouite, brindleyite, fraipontite, odinite, cronstedtite, manandonite, and pecoraite may be exemplified.

As the chlorite group, one or more selected from chamosite, clinochlore, cookeite, orthochamosite, pennantite, and sudoite may be exemplified.

As the zeolite group, one or more selected from amicite, analcime, barrerite, bellbergite, bikitaite, boggsite, brewsterite, chabazite, chiavennite, clinoptilolite, cowlesite, dachiardite, edingtonite, epistilbite, erionite, faujasite, ferrierite, garronite, gaultite, gismondine, gmelinite, gobbinsite, gonnardite, goosecreekite, gottardiite, harmotome, heulandite, hsianghualite, kalborsite, laumontite, levyne, lovdarite, maricopaite, mazzite, merlinoite, mesolite, montesommaite, mordenite, mutinaite, natrolite, offretite, pahasapaite, partheite, paulingite, perlialite, phillipsite, pollucite, roggianite, scolecite, stellerite, stilbite, terranovaite, thomsonite, tschernichite, tschortnerite, wairakite, weinebeneite, willhendersonite, and yugawaralite may be exemplified.

As the mixed clay, bentonite (clay mainly composed of montmorillonite) and the like may be exemplified. In the present disclosure, the mixed clay refers to a clay containing substances other than one clay mineral.

As the mixture containing one or more the natural mineral and the synthetic mineral, rock, soil, etc. may be exemplified. Rock is an aggregate having one or more rock-forming minerals. Soil is a mixture of one or more inorganic minerals and one or more selected from organic matter, gas, liquid, and biological material.

As the carbon, one or more selected from coal, peat, lignite, a carbonized material derived from plants, a carbonized material derived from animals, a carbonized waste material, and chemically and/or physically treated carbon may be exemplified. As the chemically and physically treated carbon, activated carbon and the like may be exemplified.

As the material derived from plants, a forestry material such as harvested timber, thinning wood, stump wood, dead trees, felling waste from park and street trees, tree pruning waste, and firewood; an agricultural materials including dehulled materials such as rice husks, wheat husks, buckwheat husks, straw materials such as rice straw and wheat straw, fruit shells such as coconut shells, walnut shells, and ivory nut shells, fruit seeds such as peach seed, rice bran, bagasse, corn cobs, and grasses; a wood-based material such as bark, sawdust, wood chips, wood-based construction materials, and driftwood; a food-based material such as used coffee grounds, used tea leaves, soy pulp, sake lees, shochu lees, beer lees, and soybean residue, etc. may be exemplified.

As the material derived from animals, meat processing residues, livestock manure, bone powder, fishery processing residues, shell powder, etc. may be exemplified.

As the waste material, kitchen waste, used paper, pulp residue, construction waste, furniture waste, paper sludge, sewage sludge, etc. may be exemplified.

As the carbon, from the viewpoint of being environmentally friendly, biochar and the like may be preferably exemplified.

As the biochar, white charcoal, black charcoal, bamboo charcoal, powdered charcoal, sawdust charcoal, charcoal derived from livestock manure, charcoal derived from herbaceous plants, charcoal derived from rice husks, charcoal derived from rice straw, charcoal derived from nuts, charcoal derived from paper sludge, charcoal derived from sewage sludge, etc. may be exemplified.

As the biological material, one or more selected from a material derived from plants and a material derived from animals may be exemplified. As the biological material, one or more selected from organs, tissues, body fluids (e.g., one or more selected from blood, saliva, serum, plasma, urine, synovial fluid, and cerebrospinal fluid), secretions (one or more selected from natural resin (one or more selected from oleoresin, balsam, rubber resin, resin, pine resin, turpentine, rosin, lacquer, and dammar), wax, and fat and oil), cells, compounds (one or more selected from amino acid, protein, lipid (one or more selected from lauric acid, myristic acid, palmitic acid, palmitoleic acid, stearic acid, calcium stearate, and oleic acid), vitamins, minerals, monosaccharides, disaccharides, carbohydrates, and resin acids), and salts thereof, obtained from biological individuals may be exemplified. As other materials derived from plants, one or more selected from sawdust, coconut shells, corn cobs, and tobacco stems may be exemplified. As other materials derived from animals, one or more selected from manure and microorganisms (e.g., bacteria, viruses, etc.) may be exemplified. The biological material may be one or more selected from organs, tissues, body fluids, secretions, cells, compounds, and salts thereof existing in living organisms, and the acquisition method thereof is not limited. The biological material does not have to be directly isolated from a living organism, and in the case where the same material can be obtained by chemical synthesis, for example, it is also classified as a biological material in the present disclosure.

In an embodiment, the component (B) may be preferably exemplified as one or more selected from talc group, bentonite, zeolite group, diatomaceous earth, and calcium stearate, for being excellent in the strength of the composition for seed coating.

The upper limit of the content (solid content conversion) of the component (B) in 100 mass% (solid content conversion) of the composition for seed coating may be exemplified as 99.9 mass%, 99.5 mass%, 99 mass%, 95 mass%, 90 mass%, 85 mass%, 80 mass%, 75 mass%, 70 mass%, 65 mass%, 60 mass%, 55 mass%, 50 mass%, 45 mass%, 40 mass%, 35 mass%, 30 mass%, 25 mass%, 20 mass%, 15 mass%, 10 mass%, 5 mass%, etc., and the lower limit may be exemplified as 99.5 mass%, 99 mass%, 95 mass%, 90 mass%, 85 mass%, 80 mass%, 75 mass%, 70 mass%, 65 mass%, 60 mass%, 55 mass%, 50 mass%, 45 mass%, 40 mass%, 35 mass%, 30 mass%, 25 mass%, 20 mass%, 15 mass%, 10 mass%, 5 mass%, 1 mass%, etc. In an embodiment, the content (solid content conversion) of the component (B) in 100 mass% (solid content conversion) of the composition for seed coating may be preferably exemplified as about 1 to 99.9 mass%, and more preferably about 90 to 99.5 mass%, for being excellent in the strength of the composition for seed coating.

The upper limit of the content ratio (mass ratio, solid content conversion, [component (A)/component (B)]) between the component (A) and the component (B) may be exemplified as 99/1, 95/5, 90/10, 85/15, 80/20, 75/25, 70/30, 65/35, 60/40, 55/45, 50/50, 45/55, 40/60, 35/65, 30/70, 25/75, 20/80, 15/85, 10/90, 5/95, 1/99, 0.5/99.5, etc., and the lower limit may be exemplified as 99/1, 95/5, 90/10, 85/15, 80/20, 75/25, 70/30, 65/35, 60/40, 55/45, 50/50, 45/55, 40/60, 35/65, 30/70, 25/75, 20/80, 15/85, 10/90, 5/95, 1/99, 0.5/99.5, 0.1/99.9, etc. In an embodiment, the content ratio (mass ratio, solid content conversion, [component (A)/component (B)]) between the component (A) and the component (B) may be preferably exemplified as about 0.1/99.9 to 99/1, and more preferably about 0.5/99.5 to 10/90, for being excellent in the strength of the composition for seed coating.

### <Other additives>

In an embodiment, the composition for seed coating may optionally contain other additives. As the other additives, a fungicide, a bactericide, an insecticide, a nematicide, a molluscicide, an acaricide, a biocide, a disinfectant, a rodenticide, an herbicide, an attractant, a (bird) repellent, a plant growth regulator (e.g., gibberellin, auxin, cytokinin, etc.), a nutrient (e.g., potassium nitrate, magnesium sulfate, iron chelating agent, etc.), a germination stimulant, a filler, a solvent, a thickener, a colorant, a defoamer, a preservative, a surfactant, an antifreeze agent, etc. may be exemplified.

As the solvent in the other additives, a solvent used in the production of the component (a1), i.e., water, an organic solvent, etc. may be exemplified. As the organic solvent, alcohols (methanol, ethanol, n-propyl alcohol, isopropyl alcohol, n-butyl alcohol, sec-butyl alcohol, t-butyl alcohol, isobutyl alcohol, n-hexyl alcohol, n-octyl alcohol, ethylene glycol, propylene glycol, diethylene glycol, triethylene glycol, diacetone alcohol, etc.), ethers (ethylene glycol monobutyl ether, propylene glycol monomethyl ether, propylene glycol monoethyl ether, etc.), etc. may be exemplified. The solvent used in the production of the component (a1) may also be used directly as the solvent of the composition for seed coating.

The upper limit of the content (solid content conversion) of the other additives in 100 mass% (solid content conversion) of the composition for seed coating may be exemplified as 20 mass%, 15 mass%, 10 mass%, 5 mass%, 3 mass%, 1 mass%, 0.5 mass%, 0.1 mass%, 0.05 mass%, 0.01 mass%, 0.005 mass%, etc., and the lower limit may be exemplified as 15 mass%, 10 mass%, 5 mass%, 3 mass%, 1 mass%, 0.5 mass%, 0.1 mass%, 0.05 mass%, 0.01 mass%, 0.005 mass%, 0 mass%, etc. In an embodiment, the content (solid content conversion) of the other additives in 100 mass% (solid content conversion) of the composition for seed coating may be preferably exemplified as about 0 to 20 mass%.

The upper limit of the content of the solvent in 100 mass% (solid content conversion) of the composition for seed coating may be exemplified as 99.9 mass%, 99 mass%, 95 mass%, 90 mass%, 85 mass%, etc., and the lower limit may be exemplified as 99 mass%, 95 mass%, 90 mass%, 85 mass%, 80 mass%, etc. In an embodiment, the content of the solvent in 100 mass% (solid content conversion) of the composition for seed coating may be preferably exemplified as about 80 mass% to 99.9 mass%.

### <Method for producing composition for seed coating>

The composition for seed coating of the present disclosure is obtained by mixing the component (A) and the component (B) of the present disclosure. Specifically, for example, a method of mixing using various conventional mixers at temperatures in natural environments (e.g., -25 to 50°C) may be mentioned.

### [Use of composition containing component (A) and component (B)]

The present disclosure relates to a use of a composition containing the component (A) and the component (B) as a composition for seed coating.

In addition, the present disclosure relates to a use of a composition containing the component (A) and the component (B) for producing a composition for seed coating.

In an embodiment, the composition containing the component (A) and the component (B) may optionally include the other additives described above within a range that does not impair the effects of the present disclosure.

### [Coated seed]

The present disclosure relates to a coated seed, which is a seed coated with the composition for seed coating of the present disclosure. Examples of the shape of the coated seed may include shapes such as a granular shape, a spherical shape, etc.

### [Method for producing coated seed]

The present disclosure relates to a method for producing a coated seed, including a process of mixing the component (A) and the component (B) of the present disclosure with a seed.

In the method for producing the coated seed, the binder for seed coating of the present disclosure may be mixed with a seed according to a conventional method. For example, the binder for seed coating of the present disclosure in liquid, powder, or semi-solid form may be coated by spraying, immersion, or brushing, onto a seed that has or has not been coated with another coating. In addition, the component (B) may also be mixed simultaneously with, before, or after coating the seed with the binder for seed coating of the present disclosure. Specifically, the component (A) and the component (B) may be mixed in a container, and then the mixture may be mixed with a seed in a granulator or the like; the component (A), the component (B), and the seed may be mixed simultaneously in a granulator or the like; the component (A) and the component (B) may be alternately mixed with the seed in a granulator or the like; the component (A) may be mixed with the seed in a granulator or the like and then the component (B) may be further mixed; or the component (B) may be mixed with the seed in a granulator or the like and then the component (A) may be further mixed. Other additives may be mixed at appropriate times. The upper limit of the temperature when mixing the binder for seed coating and/or the composition for seed coating of the present disclosure with the seed may be exemplified as 50°C, 45°C, 40°C, 35°C, 30°C, 25°C, 20°C, 15°C, 10°C, 5°C, 0°C, -5°C, -10°C, -15°C, -20°C, etc., and the lower limit may be exemplified as 45°C, 40°C, 35°C, 30°C, 25°C, 20°C, 15°C, 10°C, 5°C, 0°C, -5°C, -10°C, -15°C, -20°C, -25°C, etc. In an embodiment, the temperature when mixing the binder for seed coating and/or the composition for seed coating of the present disclosure with the seed may be preferably exemplified as about -25 to 50°C. The upper limit of the time required for mixing the binder for seed coating and/or the composition for seed coating of the present disclosure with the seed may be exemplified as 200 minutes, 150 minutes, 100 minutes, 60 minutes, 55 minutes, 50 minutes, 45 minutes, 40 minutes, 35 minutes, 30 minutes, 25 minutes, 20 minutes, 15 minutes, 10 minutes, 5 minutes, 1 minute, etc., and the lower limit may be exemplified as 150 minutes, 100 minutes, 60 minutes, 55 minutes, 50 minutes, 45 minutes, 40 minutes, 35 minutes, 30 minutes, 25 minutes, 20 minutes, 15 minutes, 10 minutes, 5 minutes, 1 minute, 0.5 minutes, etc. In an embodiment, the time required for mixing the binder for seed coating and/or the composition for seed coating of the present disclosure with the seed may be preferably exemplified as 0.5 to 200 minutes.

As the method for coating the seed, a method using a granulator (tumbling granulator, agitation granulator, compression granulator, extrusion granulator, crushing granulator, fluidized bed granulator), a method using a fluidized bed technique, a method using fluidized coating equipment by spouted bed, a method using other conventionally known equipment (drum coater, rotary coater, rotary dry coater, pan coater, continuous processing equipment, etc.), etc. may be exemplified.

The upper limit of the amount of the composition for seed coating mixed with the seed may be exemplified as 10,000 (g/seed 1kg), 5,000 (g/seed 1kg), 1,000 (g/seed 1kg), 500 (g/seed 1kg), 100 (g/seed 1kg), 50 (g/seed 1kg), 45 (g/seed 1kg), 40 (g/seed 1kg), 35 (g/seed 1kg), 30 (g/seed 1kg), 25 (g/seed 1kg), 20 (g/seed 1kg), 15 (g/seed 1kg), 10 (g/seed 1kg), 5 (g/seed 1kg), 4 (g/seed 1kg), 3 (g/seed 1kg), 2 (g/seed 1kg), 1 (g/seed 1kg), etc., and the lower limit may be exemplified as 5,000 (g/seed 1kg), 1,000 (g/seed 1kg), 500 (g/seed 1kg), 100 (g/seed 1kg), 50 (g/seed 1kg), 45 (g/seed 1kg), 40 (g/seed 1kg), 35 (g/seed 1kg), 30 (g/seed 1kg), 25 (g/seed 1kg), 20 (g/seed 1kg), 15 (g/seed 1kg), 10 (g/seed 1kg), 5 (g/seed 1kg), 4 (g/seed 1kg), 3 (g/seed 1kg), 2 (g/seed 1kg), 1 (g/seed 1kg), 0.5 (g/seed 1kg), etc. In an embodiment, the amount of the composition for seed coating mixed with the seed may be preferably exemplified as 0.5 to 10,000 (g/seed 1kg).

### [Cultivation method]

The present disclosure relates to a cultivation method including a process of sowing the coated seed of the present disclosure in soil.

In the above cultivation method, the coated seed may be sown using various conventional equipment. For example, the seed may be sown in a cell tray using a seeder, or may be sown in a paddy field. In addition, after sowing, cultivation may be performed according to various conventional methods depending on the type of each seed.

The following items are provided by the present disclosure.

### (Item A1)

A binder (A) for seed coating containing:
a (meth)acrylamide-based polymer (a1) which is a reaction product of a monomer group containing (meth)acrylamide (a1-1), where
a content (solid content conversion) of the component (a1-1) in a total amount of 100 mol% (solid content conversion) of the monomer group of the component (a1) is 30 mol% or more, and
a weight average molecular weight of the component (a1) is 100,000 or more and 10,000,000 or less.

### (Item A2)

The binder (A) for seed coating according to the above item, where the content (solid content conversion) of the component (a1-1) in the total amount of 100 mol% (solid content conversion) of the monomer group of the component (a1) is 50 mol% or more.

### (Item A3)

The binder (A) for seed coating according to any one of the above items, where the content (solid content conversion) of the component (a1-1) in the total amount of 100 mol% (solid content conversion) of the monomer group of the component (a1) is 30 to 100 mol%.

### (Item A4)

The binder (A) for seed coating according to any one of the above items, where the content (solid content conversion) of the component (a1-1) in the total amount of 100 mol% (solid content conversion) of the monomer group of the component (a1) is 30 to 95 mol%.

### (Item A5)

The binder (A) for seed coating according to any one of the above items, where the content (solid content conversion) of the component (a1-1) in the total amount of 100 mol% (solid content conversion) of the monomer group of the component (a1) is 50 to 95 mol%.

### (Item A6)

The binder (A) for seed coating according to any one of the above items, where the weight average molecular weight of the component (a1) is 100,000 or more and 5,000,000 or less.

### (Item A7)

The binder (A) for seed coating according to any one of the above items, where the monomer group of the component (a1) contains a polymerizable monomer having a sulfonic acid group which is a chain transfer agent (a1-2).

### (Item A8)

The binder (A) for seed coating according to any one of the above items, where the polymerizable monomer having a sulfonic acid group which is the chain transfer agent (a1-2) contains (meth)allylsulfonic acid salt.

### (Item A9)

The binder (A) for seed coating according to any one of the above items, where the polymerizable monomer having a sulfonic acid group which is the chain transfer agent (a1-2) contains sodium (meth)allylsulfonate.

### (Item A10)

The binder (A) for seed coating according to any one of the above items, where a content (solid content conversion) of the component (a1-2) in the total amount of 100 mol% (solid content conversion) of the monomer group of the component (a1) is 0.05 to 10 mol%.

### (Item A11)

The binder (A) for seed coating according to any one of the above items, where the content (solid content conversion) of the component (a1-2) in the total amount of 100 mol% (solid content conversion) of the monomer group of the component (a1) is 0.05 to 1.5 mol%.

### (Item A12)

The binder (A) for seed coating according to any one of the above items, where the monomer group of the component (a1) contains a polymerizable monomer (a1-3) having a cationic group.

### (Item A13)

The binder (A) for seed coating according to any one of the above items, where the polymerizable monomer (a1-3) having the cationic group contains one or more selected from N,N-dimethylaminoethyl (meth)acrylate, N,N-diethylaminoethyl (meth)acrylate, N,N-dimethylaminopropyl (meth)acrylamide, N,N-diethylaminopropyl (meth)acrylamide, and quaternary salts of these monomers.

### (Item A14)

The binder (A) for seed coating according to any one of the above items, where a content (solid content conversion) of the component (a1-3) in the total amount of 100 mol% (solid content conversion) of the monomer group of the component (a1) is 0 to 50 mol%.

### (Item A16)

The binder (A) for seed coating according to any one of the above items, where the content (solid content conversion) of the component (a1-3) in the total amount of 100 mol% (solid content conversion) of the monomer group of the component (a1) is 2 to 20 mol%.

### (Item A17)

The binder (A) for seed coating according to any one of the above items, where the monomer group of the component (a1) contains a polymerizable monomer (a1-4) having an anionic group.

### (Item A18)

The binder (A) for seed coating according to any one of the above items, where the polymerizable monomer (a1-4) having the anionic group contains one or more selected from a polymerizable monomer having a sulfonic acid group, α,β-unsaturated monocarboxylic acid, α,β-unsaturated dicarboxylic acid, alkali metal salts of these acids, and alkaline earth metal salts of these acids.

### (Item A19)

The binder (A) for seed coating according to any one of the above items, where a content (solid content conversion) of the component (a1-4) in the total amount of 100 mol% (solid content conversion) of the monomer group of the component (a1) is 0 to 55 mol%.

### (Item A20)

The binder (A) for seed coating according to any one of the above items, where the content (solid content conversion) of the component (a1-4) in the total amount of 100 mol% (solid content conversion) of the monomer group of the component (a1) is 2 to 35 mol%.

### (Item A21)

The binder (A) for seed coating according to any one of the above items, where the content (solid content conversion) of the component (a1-4) in the total amount of 100 mol% (solid content conversion) of the monomer group of the component (a1) is 2 to 15 mol%.

### (Item A22)

The binder (A) for seed coating according to any one of the above items, wherein the monomer group of the component (a1) contains a crosslinkable monomer (a1-5).

### (Item A23)

The binder (A) for seed coating according to any one of the above items, where the crosslinkable monomer (a1-5) contains one or more selected from divinyl ester, polyethylene glycol mono(meth)acrylate, polyethylene glycol di(meth)acrylate, polyalkylene glycol mono(meth)acrylate, N-substituted (meth)acrylamide, N,N-substituted (meth)acrylamide, N,N'-substituted (meth)acrylamide, aromatic polyvinyl, allyl (meth)acrylate, and triacryl formal.

### (Item A24)

The binder (A) for seed coating according to any one of the above items, where a content (solid content conversion) of the component (a1-5) in the total amount of 100 mol% (solid content conversion) of the monomer group of the component (a1) is 0 to 5.0 mol%.

### (Item A25)

The binder (A) for seed coating according to any one of the above items, where the content (solid content conversion) of the component (a1-5) in the total amount of 100 mol% (solid content conversion) of the monomer group of the component (a1) is 0.005 to 1.5 mol%.

### (Item A26)

A use of a composition containing the component (a1) according to any one of the above items as a binder for seed coating.

### (Item A27)

A use of a composition containing the component (a1) according to any one of the above items for producing a composition for seed coating.

### (Item A28)

A composition for seed coating, containing the binder (A) for seed coating according to any one of the above items and a carrier (B).

### (Item A29)

A composition for seed coating, containing:
the binder (A) for seed coating according to any one of the above items; and
one or more selected from talc group, bentonite, zeolite group, diatomaceous earth, and calcium stearate.

### (Item A30)

A use of a composition containing the component (A) according to any one of the above items and the component (B) according to any one of the above items as a composition for seed coating.

### (Item A31)

A use of a composition containing the component (A) according to any one of the above items and the component (B) according to any one of the above items for producing a composition for seed coating.

### (Item A32)

A coated seed, coated with the composition for seed coating according to any one of the above items.

### (Item A33)

A method for producing a coated seed, including a process of mixing the binder (A) for seed coating according to any one of the above items and a carrier (B) with a seed.

### (Item A34)

A cultivation method, including a process of sowing the coated seed according to any one of the above items in soil.

The composition for seed coating and the coated seed using the binder for seed coating provided in the present disclosure have good strength, so the composition for seed coating is less likely to peel off from the seed. In addition, the composition for seed coating using the binder for seed coating provided in the present disclosure is excellent in the coating property with respect to the seed.

When the composition containing the component (a1) provided in the present disclosure is used as a binder for seed coating in a composition for seed coating, the strength of the composition for seed coating becomes good, and the composition for seed coating is less likely to peel off from the seed. In addition, when the composition containing the component (a1) provided in the present disclosure is used as a binder for seed coating in a composition for seed coating, the coating property of the composition for seed coating with respect to the seed is excellent.

When the composition containing the component (A) and the component (B) provided in the present disclosure is used as a composition for seed coating, the strength becomes good, and the composition for seed coating is less likely to peel off from the seed. In addition, when the composition containing the component (A) and the component (B) provided in the present disclosure is used as a composition for seed coating, the coating property with respect to the seed becomes excellent.

### Examples

Hereinafter, the present invention will be described based on Examples, but the present invention is not limited thereto. In Examples and Comparative Examples, "parts" and "%" are on a mass basis unless otherwise specified.

### <Weight average molecular weight of component (A)>

The weight average molecular weight of the component (A) was measured according to gel permeation chromatography (GPC) method under the following measurement conditions.
Column: One guard column PWXL and two GMPWXL, manufactured by Tosoh Corporation
Eluent: Phosphate buffer solution (0.05 mol/L phosphoric acid (manufactured by FUJIFILM Wako Pure Chemical Corporation) + 0.13 mol/L sodium dihydrogen phosphate (manufactured by FUJIFILM Wako Pure Chemical Corporation) aqueous solution, pH about 2.5)
Flow rate: 0.8 ml/min
Temperature: 40°C
RI detector: Shodex RI-101, manufactured by Showa Denko K.K.
MALS detector: DAWN HELEOS-II, manufactured by WYATT Technology Corporation
Measurement sample: Diluted with the above eluent to a concentration of the polymer of 0.1% and measured.

### <Production Example A-1: Production of component (A)-1>

581 parts of ion-exchange water were placed in a reaction apparatus including a stirrer, a thermometer, a reflux condenser, a nitrogen gas introduction tube, and two dropping funnels. After removing oxygen from the reaction system by passing nitrogen gas, heating was performed until 90°C. The dropping funnel (1) was loaded with 648 parts (91.5 mol%) of 50% acrylamide (also referred to as "AM" in the present disclosure), 39 parts (5 mol%) of N,N-dimethylaminoethyl methacrylate (also referred to as "DM" in the present disclosure), 13 parts (2 mol%) of itaconic acid (also referred to as "IA" in the present disclosure), 12 parts (1.5 mol%) of sodium methallylsulfonate (also referred to as "SMAS" in the present disclosure), 19 parts of 62.5% sulfuric acid, and 412 parts of ion-exchange water, and the pH was adjusted to around 3.0 with sulfuric acid (monomer mixture liquid). The dropping funnel (2) was loaded with 0.6 parts of ammonium persulfate and 180 parts of ion-exchange water. Next, the mixture of ammonium persulfate and ion-exchange water was dropped from the dropping funnel (2) over about 3 hours. In parallel, the monomer mixture liquid of the dropping funnel (1) was dropped at a constant flow rate over about 3 hours. After completion of dropping, 0.6 parts of ammonium persulfate and 10 parts of ion-exchange water were added and kept warm for 1 hour, and 90 parts of ion-exchange water were added, to obtain an aqueous solution of a component (A)-1 with a solid content concentration of 20%. The weight average molecular weight of the component (A)-1 is shown in Table 1 below.

### <Production Examples A-2 to A-16, Comparative Production Examples A-1 to A-4: Production of component (A)-2 to component (A)-16, component (A)-C1 to component (A)-C4>

Using the compositions shown in Table 1 below, synthesis was performed in the same manner as in Production Example A-1 to respectively obtain aqueous solutions of components (A), each with a solid content concentration of 20%.

**[Table 1]**

| | | Production Example A- | | | | | | | |
|---|---|---|---|---|---|---|---|---|---|
| | | 1 | 2 | 3 | 4 | 5 | 6 | 7 | 8 |
| | | (A)-1 | (A)-2 | (A)-3 | (A)-4 | (A)-5 | (A)-6 | (A)-7 | (A)-8 |
| Component (A) | AM | 91.500 | 91.800 | 88.495 | 88.695 | 91.700 | 91.895 | 95.000 | 94.195 |
| | DM | 5.0 | 2.5 | 7.0 | 3.0 | 5.0 | 5.0 | | 5.0 |
| | DML | | 2.5 | | 2.0 | | | | |
| | IA | 2.0 | 2.0 | 2.0 | 5.0 | 2.0 | | 4.0 | |
| | AA | | | | | | 2.0 | | |
| | SMAS | 1.5 | 1.2 | 1.5 | 0.8 | 0.8 | 0.6 | 0.5 | 0.5 |
| | DMAA | | | 1.00 | 0.50 | 0.50 | 0.50 | 0.50 | 0.30 |
| | MBAA | | 0.005 | 0.005 | 0.005 | | 0.005 | | 0.005 |
| Weight average molecular weight (10,000) | | 10 | 100 | 1000 | 800 | 500 | 400 | 600 | 350 |

| | | Production Example A- | | | | | | | |
|---|---|---|---|---|---|---|---|---|---|
| | | 9 | 10 | 11 | 12 | 13 | 14 | 15 | 16 |
| | | (A)-9 | (A)-10 | (A)-11 | (A)-12 | (A)-13 | (A)-14 | (A)-15 | (A)-16 |
| Component (A) | AM | 76.200 | 81.700 | 92.640 | 93.000 | 100.000 | 90.950 | 52.950 | 33.450 |
| | DM | 15.0 | 2.0 | 5.0 | 5.0 | | 3.5 | 10.0 | 10.0 |
| | DML | 5.0 | | | | | | | |
| | IA | 2.0 | 10.0 | 2.0 | 2.0 | | | | 5.0 |
| | AA | | 5.0 | | | | | 35.0 | 50.0 |
| | SMAS | 0.8 | 0.8 | 0.05 | | | 5.0 | 1.50 | 1.0 |
| | DMAA | 1.00 | 0.50 | 0.30 | | | 0.50 | 0.50 | 0.50 |
| | MBAA | | | 0.010 | | | 0.050 | 0.050 | 0.050 |
| Weight average molecular weight (10,000) | | 500 | 400 | 200 | 500 | 500 | 150 | 400 | 450 |

| | | Comparative Production Example A- | | | |
|---|---|---|---|---|---|
| | | 1 | 2 | 3 | 4 |
| | | (A)-C1 | (A)-C2 | (A)-C3 | (A)-C4 |
| Component (A) | AM | 28.350 | 90.900 | 91.195 | |
| | DM | 10.0 | 5.0 | 5.0 | |
| | DML | 10.0 | | | |
| | IA | 10.0 | 2.0 | 2.0 | |
| | AA | 40.0 | | | |
| | SMAS | 0.8 | 2.0 | 1.2 | |
| | DMAA | 0.80 | 0.10 | 0.60 | |
| | MBAA | 0.050 | | 0.005 | |
| Component (A)' | NVF | | | | 100,000 |
| Weight average molecular weight (10,000) | | 300 | 8 | 1100 | 500 |

The meanings of the terms in Table 1 are as follows.
AM: Acrylamide
DM: N,N-dimethylaminoethyl methacrylate
DML: N,N-dimethylaminoethyl methacrylate benzyl chloride
IA: Itaconic acid
AA: Acrylic acid
SMAS: Sodium methallylsulfonate
DMAA: N,N-dimethylacrylamide
MBAA: N,N'-methylenebisacrylamide
NVF: Vinyl formaldehyde
': Indicates a comparative component.

Weight-average molecular weight (10,000): Represents the weight-average molecular weight of the component (A) or the component (A)'. "(10,000)" indicates the digit of the numerical values in the table.

### <Production Example B-1: Production of component (B)-1>

In a beaker, 95 parts by mass of talc (product name "General Purpose Talc SSS" (manufactured by Nippon Talc Co., Ltd.)) and 5 parts by mass of calcium stearate (manufactured by FUJIFILM Wako Pure Chemical Corporation) were added, and mixed for 5 minutes using a spatula until visually uniform, to obtain a component (B)-1.

### <Production Examples B-2 to B-7: Production of component (B)-2 to component (B)-7>

Mixing was performed in the same manner as in Production Example B-1 with the compositions shown in the table below.

**[Table 2]**

| | | Production Example B- | | | | | | |
|---|---|---|---|---|---|---|---|---|
| | | 1 | 2 | 3 | 4 | 5 | 6 | 7 |
| | | (B)-1 | (B)-2 | (B)-3 | (B)-4 | (B)-5 | (B)-6 | (B)-7 |
| Component (B) | Talc | 95 | | 100 | | | 90 | 40 |
| | Bentonite | | 95 | | | | | 10 |
| | Zeolite | | | | 95 | | 10 | |
| | Diatomaceous earth | | | | | 95 | | 40 |
| | SA-Ca | 5 | 5 | | 5 | 5 | | 10 |

The meanings of the terms in Table 2 are as follows.
Talc: Product name "General Purpose Talc SSS" (manufactured by Nippon Talc Co., Ltd.)
Bentonite: Product name "Super Hotaka" (manufactured by Hojun Co., Ltd.)
Zeolite: Product name "Izukalite" (manufactured by Izuka Corporation)
Diatomaceous earth: Product name "Diatomaceous earth" (manufactured by FUJIFILM Wako Pure Chemical Corporation, for chemical use, Practical Grade)
SA-Ca: Calcium stearate (manufactured by FUJIFILM Wako Pure Chemical Corporation)

### <Example 1: Production of coated seed (1)>

5 g of onion seeds (product name "Onion Momiji No. 3", manufactured by Shichiho Company) were loaded into a pan-type granulator (product name "Pan-type Granulator PZ-01R", manufactured by AS ONE Corporation). Then, after performing a treatment (α) described below, a treatment (β) was repeated until a specific size was formed. The angle and rotational speed of the granulator were basically set at 45 degrees and 80 rpm, and were appropriately adjusted while observing the coating condition.
(α) The aqueous solution of the component (A)-1 obtained in Production Example A-1 was diluted with ion-exchange water to prepare an aqueous solution with a solid content concentration of 1%. Next, 100 parts of this aqueous solution was sprayed onto the seeds using an atomizer.
(β) 100 parts of the component (B)-1 were added in small portions into the pan-type granulator.

From these coated seeds, coated seeds of 3 mm to 4 mm were selected and dried at room temperature (23°C). The moisture content of the dried coated seeds was measured using an infrared moisture meter and was less than 8%. The production of coated seeds was performed according to the above method until 10 g or more of coated seeds were obtained.

### <Examples 8 to 16, Comparative Examples 1 to 4: Production of coated seeds (8) to (16), (C1) to (C4)>

Coated seeds (8) to (16), (C1) to (C4) were produced in the same manner as in Example 1 except that the component (A) was changed to the compositions as shown in the table below.

### <Example 2: Production of coated seed (2)>

5 g of onion seeds (product name "Onion Momiji No. 3", manufactured by Shichiho Company) were loaded into a pan-type granulator (product name "Pan-type Granulator PZ-01R", manufactured by AS ONE Corporation). Then, after performing a treatment (α) described below, a treatment (β) was repeated until a specific size was formed. The angle and rotational speed of the granulator were basically set at 45 degrees and 80 rpm, and were appropriately adjusted while observing the coating condition.
(α) The aqueous solution of the component (A)-2 obtained in Production Example A-2 was diluted with ion-exchange water to prepare an aqueous solution with a solid content concentration of 1%. Next, 150 parts of this aqueous solution were sprayed onto the seeds using an atomizer.
(β) 100 parts of the component (B)-2 were added in small portions into the pan-type granulator.

From these coated seeds, coated seeds of 3 mm to 4 mm were selected and dried at room temperature (23°C). The moisture content of the dried coated seeds was measured using an infrared moisture meter and was less than 8%. The production of coated seeds was performed according to the above method until 10 g or more of coated seeds were obtained.

### <Example 3: Production of coated seeds (3)>

5 g of onion seeds (product name "Onion Momiji No. 3", manufactured by Shichiho Company) were loaded into a pan-type granulator (product name "Pan-type Granulator PZ-01R", manufactured by AS ONE Corporation). Then, after performing a treatment (α) described below, a treatment (β) was repeated until a specific size was formed. The angle and rotational speed of the granulator were basically set at 45 degrees and 80 rpm, and were appropriately adjusted while observing the coating condition.
(α) The aqueous solution of the component (A)-3 obtained in Production Example A-3 was diluted with ion-exchange water to prepare an aqueous solution with a solid content concentration of 1%. Next, 200 parts of this aqueous solution were sprayed onto the seeds using an atomizer.
(β) 100 parts of the component (B)-3 were added in small portions into the pan-type granulator.

From these coated seeds, coated seeds of 3 mm to 4 mm were selected and dried at room temperature (23°C). The moisture content of the dried coated seeds was measured using an infrared moisture meter and was less than 8%. The production of coated seeds was performed according to the above method until 10 g or more of coated seeds were obtained.

### <Example 4: Production of coated seed (4)>

5 g of onion seeds (product name "Onion Momiji No. 3", manufactured by Shichiho Company) were loaded into a pan-type granulator (product name "Pan-type Granulator PZ-01R", manufactured by AS ONE Corporation). Then, after performing a treatment (α) described below, a treatment (β) was repeated until a specific size was formed. The angle and rotational speed of the granulator were basically set at 45 degrees and 80 rpm, and were appropriately adjusted while observing the coating condition.
(α) The aqueous solution of the component (A)-4 obtained in Production Example A-4 was diluted with ion-exchange water to prepare an aqueous solution with a solid content concentration of 1%. Next, 150 parts of this aqueous solution were sprayed onto the seeds using an atomizer.
(β) 100 parts of the component (B)-4 were added in small portions into the pan-type granulator.

From these coated seeds, coated seeds of 3 mm to 4 mm were selected and dried at room temperature (23°C). The moisture content of the dried coated seeds was measured using an infrared moisture meter and was less than 8%. The production of coated seeds was performed according to the above method until 10 g or more of coated seeds were obtained.

### <Example 5: Production of coated seed (5)>

5 g of onion seeds (product name "Onion Momiji No. 3", manufactured by Shichiho Company) were loaded into a pan-type granulator (product name "Pan-type Granulator PZ-01R", manufactured by AS ONE Corporation). Then, after performing a treatment (α) described below, a treatment (β) was repeated until a specific size was formed. The angle and rotational speed of the granulator were basically set at 45 degrees and 80 rpm, and were appropriately adjusted while observing the coating condition.
(α) The aqueous solution of the component (A)-5 obtained in Production Example A-5 was diluted with ion-exchange water to prepare an aqueous solution with a solid content concentration of 1%. Next, 100 parts of this aqueous solution were sprayed onto the seeds using an atomizer.
(β) 100 parts of the component (B)-5 were added in small portions into the pan-type granulator.

From these coated seeds, coated seeds of 3 mm to 4 mm were selected and dried at room temperature (23°C). The moisture content of the dried coated seeds was measured using an infrared moisture meter and was less than 8%. The production of coated seeds was performed according to the above method until 10 g or more of coated seeds were obtained.

### <Example 6: Production of coated seed (6)>

5 g of onion seeds (product name "Onion Momiji No. 3", manufactured by Shichiho Company) were loaded into a pan-type granulator (product name "Pan-type Granulator PZ-01R", manufactured by AS ONE Corporation). Then, after performing a treatment (α) described below, a treatment (β) was repeated until a specific size was formed. The angle and rotational speed of the granulator were basically set at 45 degrees and 80 rpm, and were appropriately adjusted while observing the coating condition.
(α) The aqueous solution of the component (A)-6 obtained in Production Example A-6 was diluted with ion-exchange water to prepare an aqueous solution with a solid content concentration of 1%. Next, 150 parts of this aqueous solution were sprayed onto the seeds using an atomizer.
(β) 100 parts of the component (B)-6 were added in small portions into the pan-type granulator.

From these coated seeds, coated seeds of 3 mm to 4 mm were selected and dried at room temperature (23°C). The moisture content of the dried coated seeds was measured using an infrared moisture meter and was less than 8%. The production of coated seeds was performed according to the above method until 10 g or more of coated seeds were obtained.

### <Example 7: Production of coated seed (7)>

5 g of onion seeds (product name "Onion Momiji No. 3", manufactured by Shichiho Company) were loaded into a pan-type granulator (product name "Pan-type Granulator PZ-01R", manufactured by AS ONE Corporation). Then, after performing a treatment (α) described below, a treatment (β) was repeated until a specific size was formed. The angle and rotational speed of the granulator were basically set at 45 degrees and 80 rpm, and were appropriately adjusted while observing the coating condition.
(α) The aqueous solution of the component (A)-7 obtained in Production Example A-7 was diluted with ion-exchange water to prepare an aqueous solution with a solid content concentration of 1%. Next, 150 parts of this aqueous solution were sprayed onto the seeds using an atomizer.
(β) 100 parts of the component (B)-7 were added in small portions into the pan-type granulator.

From these coated seeds, coated seeds of 3 mm to 4 mm were selected and dried at room temperature (23°C). The moisture content of the dried coated seeds was measured using an infrared moisture meter and was less than 8%. The production of coated seeds was performed according to the above method until 10 g or more of coated seeds were obtained.

### <Performance evaluation (1): Coating property>

When producing each of the coated seeds (1) to (16) and (C1) to (C4), the coating property of the composition for seed coating was evaluated according to the following criteria.
∘: The composition for seed coating was capable of being coated onto the seeds.
×: The composition for seed coating was not capable of being coated onto the seeds, as viscosity was high and spraying was difficult, the carrier aggregated, or the coating composition did not adhere to the seeds.

### <Performance evaluation (2): Strength>

With respect to 10 g of each of the coated seeds (1) to (16) and (C1) to (C4), a silicone rubber surface of a 5 kg test tool having the silicone rubber surface was disposed to contact each coated seed placed on a steel plate, and was rotated 90 degrees. After repeating this 10 times, the seeds were manually sieved using a sieve with 2.8 mm openings, and the mass of the binder for seed coating and/or the carrier peeled off with respect to the initial mass of the coated seeds was determined. The evaluation was performed according to the following criteria based on the proportion of detachment.
∘: 5% or less
Δ: More than 5%, and 10% or less
×: More than 10%

**[Table 3]**

| | Example | | | | | | | |
|---|---|---|---|---|---|---|---|---|
| | 1 | 2 | 3 | 4 | 5 | 6 | 7 | 8 |
| | Coated seed (1) | Coated seed (2) | Coated seed (3) | Coated seed (4) | Coated seed (5) | Coated seed (6) | Coated seed (7) | Coated seed (8) |
| Component (A) | (A)-1 | (A)-2 | (A)-3 | (A)-4 | (A)-5 | (A)-6 | (A)-7 | (A)-8 |
| Component (B) | (B)-1 | (B)-2 | (B)-3 | (B)-4 | (B)-5 | (B)-6 | (B)-7 | (B)-1 |
| Performance evaluation (1) Coating property | ○ | ○ | ○ | ○ | ○ | ○ | ○ | ○ |
| Performance evaluation (2) Strength | ○ | ○ | ○ | ○ | ○ | ○ | ○ | ○ |
| | Example | | | | | | | |
| | 9 | 10 | 11 | 12 | 13 | 14 | 15 | 16 |
| | Coated seed (9) | Coated seed (10) | Coated seed (11) | Coated seed (12) | Coated seed (13) | Coated seed (14) | Coated seed (15) | Coated seed (16) |
| Component (A) | (A)-9 | (A)-10 | (A)-11 | (A)-12 | (A)-13 | (A)-14 | (A)-15 | (A)-16 |
| Component (B) | (B)-1 | (B)-1 | (B)-1 | (B)-1 | (B)-1 | (B)-1 | (B)-1 | (B)-1 |
| Performance evaluation (1) Coating property | ○ | ○ | ○ | ○ | ○ | ○ | ○ | ○ |
| Performance evaluation (2) Strength | ○ | ○ | ○ | Δ | Δ | Δ | ○ | Δ |

| | Comparative Example | | | | | | | |
|---|---|---|---|---|---|---|---|---|
| | 1 | 2 | 3 | 4 | | | | |
| | Coated seed (C1) | Coated seed (C2) | Coated seed (C3) | Coated seed (C4) | | | | |
| Component (A) | (A)-C1 | (A)-C2 | (A)-C3 | (A)-C4 | | | | |
| Component (B) | (B)-1 | (B)-1 | (B)-1 | (B)-1 | | | | |
| Performance evaluation (1) Coating property | O | × | × | × | | | | |
| Performance evaluation (2) Strength | × | - | - | - | | | | |

## Claims

1. A binder (A) for seed coating comprising:
a (meth)acrylamide-based polymer (a1) which is a reaction product of a monomer group containing (meth)acrylamide (a1-1), wherein
a content (solid content conversion) of component (a1-1) in a total amount of 100 mol% (solid content conversion) of the monomer group of component (a1) is 30 mol% or more, and
a weight average molecular weight of component (a1) is 100,000 or more and 10,000,000 or less.

2. The binder (A) for seed coating according to claim 1, wherein the monomer group of component (a1) contains a polymerizable monomer having a sulfonic acid group which is a chain transfer agent (a1-2).

3. A composition for seed coating, comprising the binder (A) for seed coating according to claim 1 or 2 and a carrier (B).

4. A coated seed, coated with the composition for seed coating according to claim 3.

5. A method for producing a coated seed, comprising a process of mixing the binder (A) for seed coating according to claim 1 or 2 and a carrier (B) with a seed.

6. A cultivation method, comprising a process of sowing the coated seed according to claim 4 in soil.
